# EUROPÄISCHE PATENTSCHRIFT

(11) **EP 1 038 562 B1**
(45) Veröffentlichungstag und Bekanntmachung des Hinweises auf die Patenterteilung: **10.05.2006**
(21) Anmeldenummer: 00810146.1
(22) Anmeldetag: 22.02.2000
(51) Int. Cl.: B01D 3/16, B01D 3/00

(54) **Vorrichtung zum Sammeln und Verteilen von Flüssigkeit in einer Kolonne**
Apparatus for collecting and distributing liquids in a column
Dispositif pour collecter et distribuer des liquides dans une colonne

(30) Priorität: 19.03.1999 EP 99810247
(43) Veröffentlichungstag der Anmeldung: 27.09.2000
(73) Patentinhaber: Sulzer Chemtech AG, CH-8404 Winterthur (CH)
(72) Erfinder: Bartlok, Guido, 01187 Dresden (DE)
(74) Vertreter: Sulzer Management AG

(56) Entgegenhaltungen:
- EP-A- 0 374 443
- DE-A- 4 018 137
- DE-A- 4 314 551
- DE-A- 19 615 645
- US-A- 5 464 573

## Beschreibung

Die Erfindung betrifft eine Vorrichtung zum Sammeln und Verteilen von Flüssigkeit in einer Kolonne. Dabei befinden sich in der Kolonne mehrere ungeordnete oder geordnete Packungen jeweils auf einem Tragrost, unter dem die Vorrichtung zum Sammeln und Verteilen von Flüssigkeit angeordnet ist.

Bei derartigen Stoffaustauschkolonnen wird die Packung oder die Füllkörper von einem Tragrost gestützt, wobei die Flüssigkeit über diesen Tragrost abtropft und von einem Flüssigkeitssammler aufgefangen, gemischt und der Neu- bzw. Wiederverteilung oder Flüssigkeitsentnahme zugeleitet wird.

Anwendungsgebiet ist bevorzugt die Stofftrenntechnik, wie die Absorption und Desorption in fluiden Systemen, die Destillation und Rektifikation sowie die technische Reaktionsführung an Katalysatorschichten. Seit einigen Jahren ist es üblich, in den Stoffaustauschkolonnen ungeordnete Füllkörper oder Packungen, insbesondere strukturierte bzw. geordnete Packungen einzusetzen. Deren Wirksamkeit hängt sehr stark von der gleichmäßigen Benetzung ihrer Oberfläche mit Rücklaufflüssigkeit und von der Einhaltung eines über den Querschnitt gleichen Flüssigkeits-Dampf-Massenverhältnisses ab. Bei ungleichmäßiger Flüssigkeitsaufgabe und -verteilung und daraus folgender ungleichmäßiger Benetzung kommt es innerhalb der Füllkörperschichten zu Maldistribution (Fehlverteilung) zum Beispiel in Form von Kanalströmung. Dies schränkt die Wirksamkeit und die Funktion der Austauschkolonne ganz erheblich ein.

Daher wird oberhalb einer Packungssektion ein Flüssigkeitsverteiler angeordnet, der die nach unten strömende Flüssigkeit möglichst homogen über den Kolonnenquerschnitt verteilen soll.

Es sind eine große Anzahl von Sammler- und Verteiler-Vorrichtungen für Flüssigkeiten bekannt, die mit mehr oder weniger großem Aufwand versuchen, die notwendige gleichmäßige Flüssigkeitsverteilung in den beschriebenen Stoffaustauschkolonnen zu erreichen. Derartige Verteiler sind beispielsweise aus einem Aufsatz von P. Bomio et al., Chem. Tech., 43.Jg., Heft 11/12, 1991 bekannt und werden dort als Rohrverteiler, Elementverteiler oder Kanalverteiler bezeichnet. Diese Typen von Flüssigkeitsverteilern weisen horizontal ausgerichtete Verteilkanäle auf, die von mindestens einem Hauptkanal gespeist werden, der in der Regel senkrecht zu den Verteilkanälen verläuft. Bei einem Rohrverteiler sind die Verteilkanäle an der Oberseite geschlossen, bei einem Element- oder Kanalverteiler sind sie oben offen. Element- oder Kanalverteiler arbeiten mit einer gewissen Füllstandshöhe in den Kanälen. Der damit verbundene hydrostatische Druck regelt die Flüssigkeitsmenge, die durch spezielle Ablaufelemente auf die darunterliegende Packungssektion tropft. Die Füllstandshöhe steigt etwa quadratisch mit der Flüssigkeitsbelastung an. Da die Kanäle einen großen Teil des Kolonnenquerschnitts überdecken, enthält ein derartiger Verteiler große Mengen an Flüssigkeit einer bestimmten Zusammensetzung. Dies wirkt sich auf die Trägheit des Verteilers und damit der ganzen Kolonne gegenüber schnellen Änderungen der Zusammensetzung der aufgegebenen Flüssigkeit aus.

Die prinzipielle Funktionsbeschreibung dieser bekannten Sammler- und Verteiler-Vorrichtungen zeigt auch gleichermaßen deren Nachteile auf.

Die aus einer Packungssektion fließende Flüssigkeit wird von einem Flüssigkeitssammler aufgefangen und zusammengeführt. Über eine Rohr- oder Schachtkonstruktion wird die Flüssigkeit aus dem Flüssigkeitssammler in den Hauptkanal oder die Nebenkanäle des Verteilers geführt. Die Einspeisung erfolgt über einen relativ großen, im allgemeinen zentralen Einlauf oder mehrere relativ große Einläufe. Die aus dieser Bauweise folgenden Turbulenzen und Fließgeschwindigkeiten der Flüssigkeit sind bei derartigen Verteilereinläufen sehr groß und müssen durch zusätzliche Einbauten reduziert werden. Dafür müssen im Hauptkanal geeignete Mittel, wie Vorverteilkanal oder Einlaufberuhiger, eingebaut werden. Die Überführung der Flüssigkeit erfolgt einstufig oder mehrstufig in geschlossener oder offener Ausführung, jedoch immer in der Form, daß die Flüssigkeit der Schwerkraft folgend fließt. Dabei tritt das Problem auf, daß durch die Strömung in Längsrichtung der Verteilkanäle eine ungleichmäßige Verteilung von Flüssigkeit bewirkt wird. Je nachdem, wie weit Flüssgkeitseintritt und Flüssigkeitsaustritt in einem Kanal voneinander entfernt sind, wird die Austrittsöffnung von Flüssigkeit mit unterschiedlicher Austrittsgeschwindigkeit durchströmt.

Es wurde außerdem erkannt, daß die Schwachstellen der Stoffaustauschkolonnen hinsichtlich schneller Laständerungen bei den Flüssigkeitssammlern und Flüssigkeitsverteilern liegt. Besonders wichtig sind jene Verteiler und Sammler, die zwischen Packungsabschnitten angeordnet sind und für eine möglichst gleichmäßige Verteilung der Rücklaufflüssigkeit auf den Kolonnenquerschnitt sorgen sollen. Es dauert beispielsweise lange Zeit, bis ein neuer stationärer Zustand, verbunden mit einer höheren oder niedrigeren Füllstandshöhe in den Verteilern, erreicht wird. Die Ursache ist darin zu sehen, daß bis zur Einstellung des neuen stationären Zustandes die Konzentration großer Flüssigkeitsvolumina verändert werden muß.

Weiterhin muß man feststellen, daß die bisherigen Vorrichtungen für das Zusammenführen und vollständige Mischen der gesamten Rücklaufflüssigkeit nach dem Auffangen im Sammler und das anschließende mehrstufige Neu- bzw. Wiederverteilen bis hin zur Feinverteilung an den Tropfstellen konstruktiv sehr aufwendig sind.

Die häufig angewandte mehrstufige Grobverteilung der gesamten Rücklaufflüssigkeit durch Einläufe, Hauptkanäle und Nebenkanäle birgt relativ viele Quellen für Fehlverteilung der Flüssigkeit in sich. Fehlerquellen sind zum Beispiel die ungleichmäßige Strömungsführung durch ständiges Beschleunigen und Verzögern der Flüssigkeit und die ungenügende Nivellierung bei der Montage.

Es bedarf bei den bekannten Vorrichtungen großer geodätischer Höhenunterschiede, um die großen Flüssigkeitsvolumina mehrfach ausreichend zu beschleunigen und zu verzögern. Dadurch ist die Bauhöhe der bekannten Vorrichtung relativ groß.

Außerdem bewirken die Vorrichtungen für die Grobverteilung eine starke Ungleichförmigkeit für die Gas- bzw. Dampfströmung, was einen Einfluß auf den Wirkungsgrad der gesamten Kolonne hat.

Aus dem Stand der Technik ist weiterhin bekannt, daß man, um die Bauhöhe der Stoffaustauschkolonnen zu verringern, auf Einbauten zur gezielten Vermischung der herabtropfenden und aufgefangenen Flüssigkeit verzichten kann. Eine Vorrichtung zum Sammeln und Wiederverteilen von Flüssigkeit nach dem Oberbegriff der Erfindung wurde in US 5464573 beschrieben. Die darin offenbarte Vorrichtung verzichtet auf Einbauten zur gezielten Vermischung der aufgefangenen Flüssigkeit mit dem entscheidenden Nachteil, daß bei Flüssigkeitsungleichverteilung es in horizontaler Ebene zu einem Flüssigkeitsausgleich und den damit verbundenen Strömungen kommt. Die bereits beschriebenen Effekte von Turbulenzen bei der Flüssigkeitsverteilung in herkömmlichen Verteilervorrichtungen werden durch die bloße Einsparung von Sammel und Vorverteilerstufen sogar noch verstärkt und die Folge ist ungleichmäßiger Flüssigkeitsaustritt aus dem Verteiler.

Der Erfindung liegt nunmehr die Aufgabe zugrunde, eine Vorrichtung zum Sammeln und Verteilen von Gas und Flüssigkeit in Stoffaustauschkolonnen zu entwickeln, die eine sehr homogene Flüssigkeitsaufgabe über den Kolonnenquerschnitt bei geringer Bauhöhe ermöglicht und außerdem eine schnelle Anpassung an Laständerungen im Betrieb möglicht.

Eine erfindungsgemäße Vorrichtung ist derart ausgebildet, daß der Flüssigkeitssammler, der Gas- bzw. Dampfverteiler und der Flüssigkeitsverteiler miteinander in einer Vorrichtung kombiniert sind.

Die von einem erfindungsgemäß modifizierten Sammler aufgefangene Rücklaufflüssigkeit wird nicht zum Zwecke eines Ausgleichs der Zusammensetzung gezielt zusammengeführt und intensiv gemischt, sondern es wurde überraschender Weise gefunden, daß die Aufgabe der Erfindung dadurch gelöst wird, daß die Flüssigkeit unmittelbar im Sammler derart gleichmäßig verteilt, daß mit einer geringen geodätischen Höhendifferenz ein hydrodynamischer Ausgleich realisiert wird.

Ein hydrodynamischer Ausgleich liegt vor, wenn an örtlich getrennten gleichartigen Flüssigkeitsaustrittsöffnungen Richtung, Geschwindigkeit und Spiegelhöhe der darüber befindlichen Flüssigkeitströmung gleich sind.

Die Intensität der Ausgleichströmungen und die Menge der am hydrodynamischen Ausgleich beteiligten Flüssigkeit wird durch die hydrodynamische Fehlverteilung am Ende der über dem Sammler-Verteiler-Vorrichtung befindlichen Packungssektion beeinflußt. Die Sammler-Verteiler-Vorrichtung verfügt über Strömungszerleger, welche die horizontalen Ausgleichströmungen derart führen, daß diese keinen störenden Einfluß auf die Neuverteilung der Rücklaufflüssigkeit ausüben können. Die Vorrichtung ist so gestaltet, daß die Flüssigkeit vorzugsweise direkt von der Auffangstelle zur nächstliegenden Tropfstelle mit geringer Strömungsgeschwindigkeit fließt.

Als wesentliche Vorteile der Erfindung sind zu nennen, daß eine sehr homogene fluiddynamische Flüssigkeitsaufgabe bei hoher Verteilgüte durch Reduzierung unnötiger Strömungsturbulenzen erreicht wird und eine hohe Tropfstellendichte bei kleiner Bauhöhe realisiert wird. Die notwendigen Ausgleichströmungen sind weit geringer als die Strömungen in bisherigen Sammler-Verteiler-Konstruktionen.

Weiterhin verringert sich der stationäre Flüssigkeitsinhalt (Holdup) gegenüber einer konventionellen Sammler-Verteiler-Vorrichtung durch eine kleinere Anzahl von Verteilerstufen und der horizontale Flüssigkeitstransport wird stark reduziert. Für die Verteilerkanäle sind somit kleinere Kanalbreiten realisierbar.

Eine Verbesserung des Lastwechselverhaltens wird durch die kürzere Verweilzeit der Flüssigkeit in der Sammler-Verteiler-Vorrichtung und durch die Verringerung des stationären Flüssigkeitsinhalts bedingt.

Vorteilhaft ist auch die Reduzierung des Gesamtgewichts der Vorrichtung und die Verringerung der Aufwendungen für die Montage im Vergleich zu konventionellen Sammler-Verteiler-Vorrichtungen.

An Stelle der Verringerung der Bauhöhe der Kolonne kann die Trennstufenzahl in bestehenden Kolonnen nachträglich erhöht werden, wenn die Möglichkeit des Einbaus zusätzlicher Packungen nach dem Ersetzen der konventionellen Sammler-Verteiler-Vorrichtung durch eine neuartige, gemäß der Erfindung, genutzt wird.

Die Erfindung, sowie weitere Einzelheiten werden im folgenden anhand von in den Skizzen dargestellten Ausführungsbeispielen näher erläutert.

Hierbei zeigen:
- Fig. 1: die schematische Illustration der bisherigen Bauweise, Packungskolonne mit separater Sammler- und Verteilervorrichtung,
- Fig. 2: die schematische Darstellung einer Packungskolonne mit einer Sammler- und Verteilervorrichtung entsprechend der Erfindung,
- Fig. 3: den perspektivischen Blick von oben auf eine Wiederverteilstation gemäß der Erfindung, bestehend aus Flüssigkeitssammler und -verteiler, teilweise weggebrochen,
- Fig. 4: Ausführungsbeispiel für die erfindungsgemäße Weiterentwicklung einer Sammler-Verteiler-Vorrichtung in schaubildlicher Ansicht,
- Fig. 5 a/b/c: verschiedene Beispiele für die Ausführung der Haupt- und Nebenkanäle des Lamellensammlers,
- Fig. 6: Ausführungsbeispiel für einen Einlaufberuhiger in vergrößerter Ansicht
- Fig. 7: Ausführungsbeispiel für ein Verteiler-Ausflußsystem

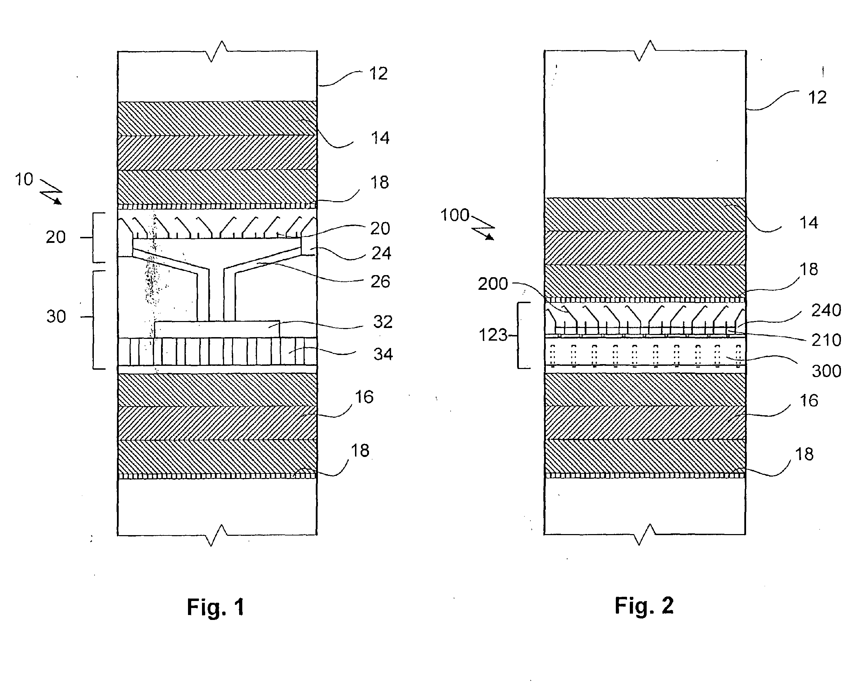

In **Fig. 1** ist die schematische Illustration einer konventionellen Wiederverteilstation 10 dargestellt. Dabei ist der Kolonnenschuß 12, das obere Packungsbett 14, das untere Packungsbett 16 und die dazwischen plazierte Wiederverteilstation zu sehen. Letztere besteht aus einer Sammlervorrichtung 20 und einer völlig separaten Verteilervorrichtung 30. Durch mindestens ein langgestrecktes und abwärts gerichtetes Fallrohr 26 wird die Flüssigkeit von der Sammlervorrichtung 20 zum meist zentralen Einlauf des Vorverteilers 32 oder Verteilers 34 geleitet. Anschließend soll die Flüssigkeit mit Hilfe mindestens einer Verteilerstufe gleichmäßig über das untere Packungsbett 16 aufgegeben werden.

**Fig. 2** ist die schematische Darstellung einer Wiederverteilstation 100 mit einer kompakten Sammler-Verteiler-Vorrichtung 123 entsprechend der Erfindung. Die Darstellung umfaßt den Kolonnenschuß 12, wie in Fig.1, ein oberes und unteres Packungsbett 14 und 16. Die Verringerung des Raumes zwischen dem oberen und unteren Packungsbett im Vergleich zu Fig.1 ist deutlich erkennbar.

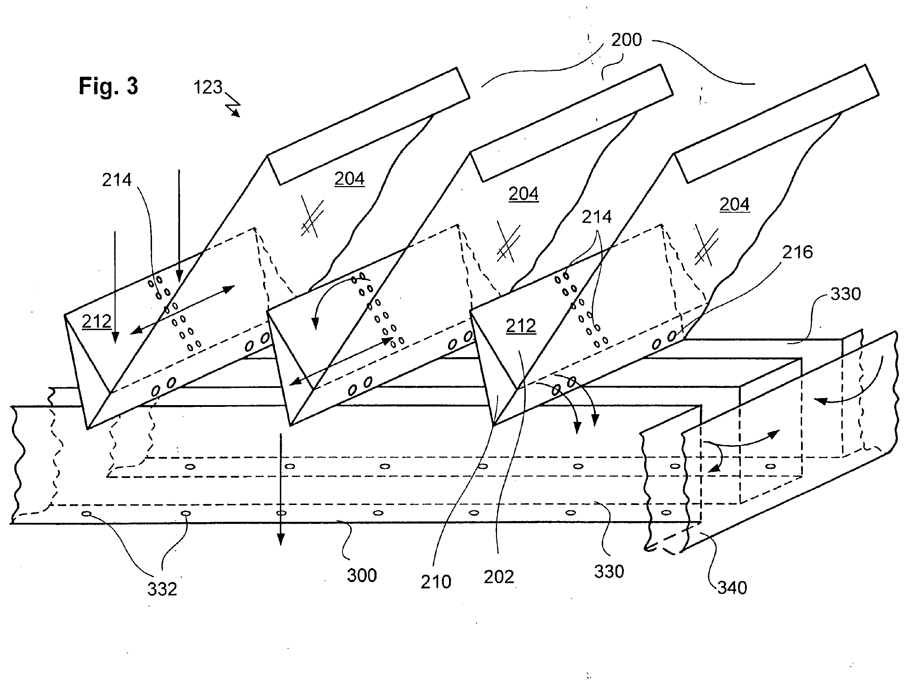

**Fig. 3** zeigt Ausschnitte einer kompakten Sammler-Verteiler-Vorrichtung 123, die sich zusammensetzt aus einem Lamellensammler 200 mit integrierten Nebenkanälen 210 und einem darunter angeordneten Verteiler-Ausflußsystem 300, vorzugsweise mit einem Ringkanal 340.

Die Hauptkanäle 202 des Lamellensammlers 200 sind horizontal parallel zueinander angeordnet, sie variieren in der Länge, so daß sie bis an den Kolonnenschuß heranreichen. Die sogenannten Lamellen 204 des Lamellensammlers 200 sind von der senkrechten Kolonnenachse abweichende winklig abgekantete oder befestigte Bleche an der oberen Kante der Hauptkanäle 202. Ihre projizierte Fläche überdeckt die quasi freie Kolonnenquerschnittsfläche zwischen den Hauptkanälen 202 und leitet dadurch die vom oberen Packungsbett 14 herunterrieselnde Flüssigkeit in die Hauptkanäle 202 des Sammlers. Die Lamellen 204 sind am oberen Ende ein kleines Stück schräg nach unten abgekantet und leiten einen Teil der aufgefangenen Flüssigkeit in den benachbarten Hauptkanal. Jeder Hauptkanal 202 des Sammlers enthält einen Strömungszerleger 212, beispielsweise in Form eines Blechs oder Profils, mit hydraulisch definierte Öffnungen und mit einem schrägen oder horizontalen Abschnitt. Dieser Strömungszerleger 212 ist ein Bestandteil des Nebenkanals 210 und grenzt diesen vom Hauptkanal ab. Der Zulauf der Flüssigkeit vom Hauptkanal 202 zum Nebenkanal 210 erfolgt über hydraulisch definierte Flüssigkeitsaustrittsöffnungen 214. Die Flüssigkeit verläßt den Nebenkanal 210 über andere hydraulisch definierte Flüssigkeitsaustrittsöffnungen 216 und gelangt in das Verteiler-Ausflußsystem 300.

Wenn die eingeleitete Flüssigkeitsmengen aus den verschiedenen Nebenkanälen 210 differieren, findet auch in den Verteilerkanälen 330 ein hydrodynamischer Ausgleich statt. Es kann vorzugsweise ein Ringkanal 340 so angeordnet werden, daß über ihn alle Verteilerkanäle 330 mit einander verbunden sind. Die Flüssigkeit fließt und verteilt sich dann gleichmäßig nach dem Prinzip der kommunizierenden Röhren. Die Verteilerkanäle 330 verfügen über ein Abflußsystem, daß hydraulisch definierte Flüssigkeitsaustrittsöffnungen 332 aufweist. Durch diese Flüssigkeitsaustrittsöffnungen 332 wird die Flüssigkeit gleichmäßig auf das untere Packungsbett aufgegeben.

Der Lamellensammler 200 wird vom Nebenkanal 210 durch einen Strömungszerleger 212 getrennt. Unter Strömungszerleger wird hier eine Konstruktion verstanden, die ein in einer Richtung strömendes Medium in zwei Teilströme mit verschiedener Richtung aufteilt, z. B. in einen weiterhin horizontalen Strom und einen mit vertikaler Richtungskomponente. Der Strömungszerleger 212 ist vorzugsweise so angeordnet, daß er sich während des Betriebs unterhalb der Oberfläche der im entsprechendem Hauptkanal 202 zuvor aufgefangenen und dann anstehenden bzw. fließenden Flüssigkeit befindet. Er bewirkt einen Strömungswiderstand in vertikaler Richtung. Dadurch entstehen zwei Strömungsquerschnitte. Im oberen, dem Hauptkanal 202, wird die Flüssigkeit horizontal transportiert und im unteren Kanal, dem Nebenkanal 210, entsteht allein eine Strömung in Richtung der Flüssigkeitsaustrittsöffnungen 216. Der Abbau der durch die Fehlverteilung bedingten horizontalen Strömungsgeschwindigkeit unmittelbar über den Flüssigkeitsaustrittsöffnungen 216 bewirkt eine deutliche Verbesserung der Verteilgüte.

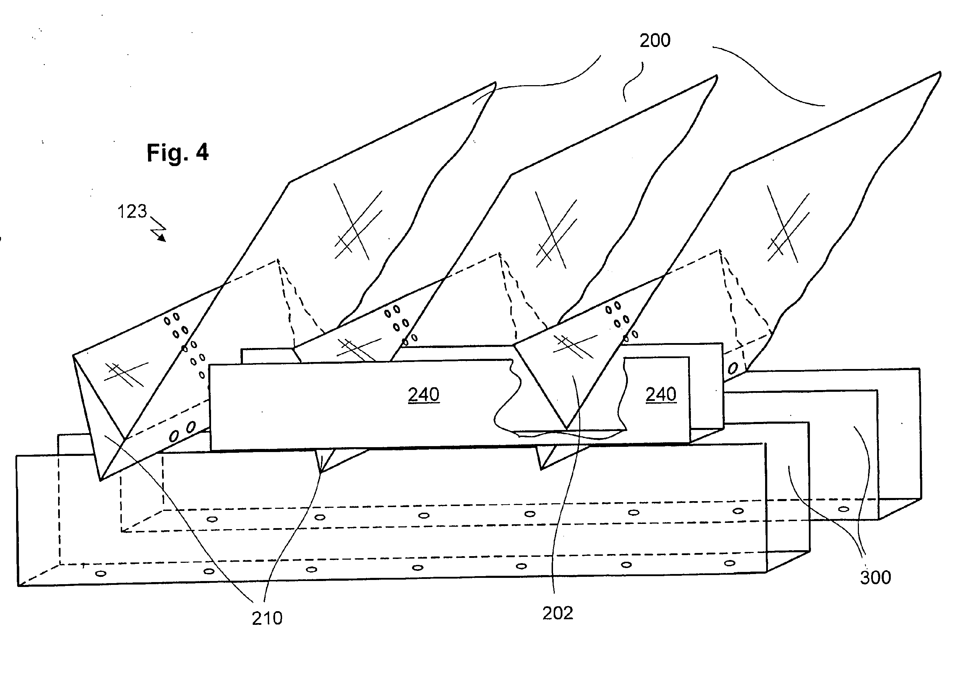

**Fig. 4** zeigt den Ausschnitt einer variierten kompakten Sammler-Verteiler-Vorrichtung 123, die sich zusammensetzt aus einer Art Lamellensammler 200 mit integrierten Nebenkanälen 210 und mit einem Ringkanal 240 sowie einem darunter angeordneten Verteiler-Ausflußsystem 300. Die Hauptkanäle 202 des Lamellensammlers 200 sind horizontal parallel zueinander angeordnet, sie variieren in der Länge, so daß sie bis an den Ringkanal 240, der an der inneren Seite des Kolonnenschusses angeordnet ist, heranreichen. Alle Hauptkanäle 202 des Sammlers sind dadurch an den Ringkanal 240 angeschlossen und auf diese Weise über ihn miteinander verbunden. Der Ringkanal 240 ermöglicht die Angleichung der Flüssigkeitsmengen in allen Hauptkanälen 202 auf ein Niveau.

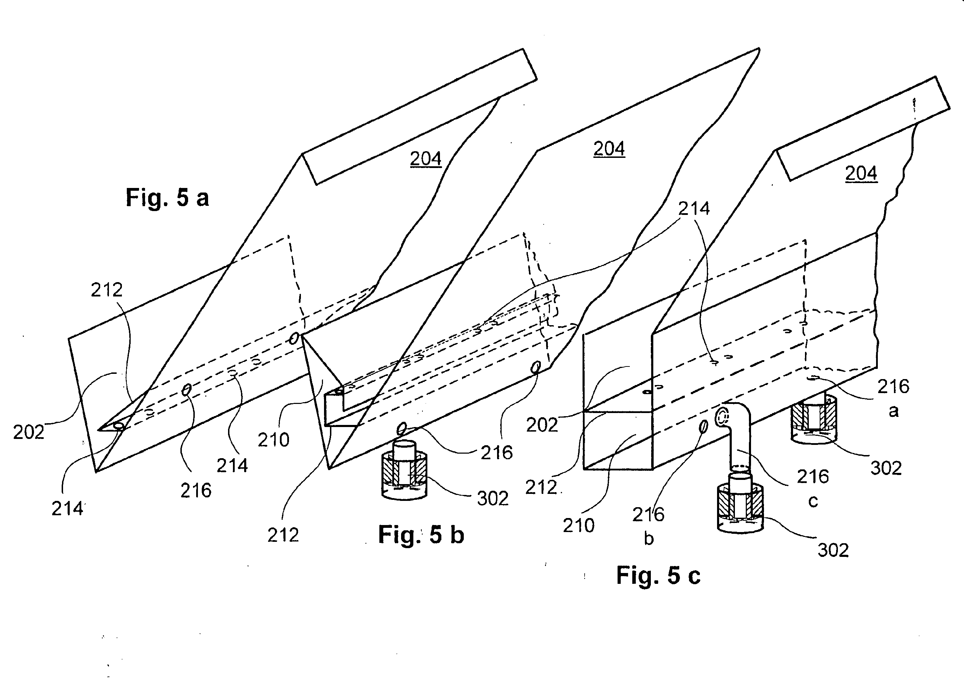

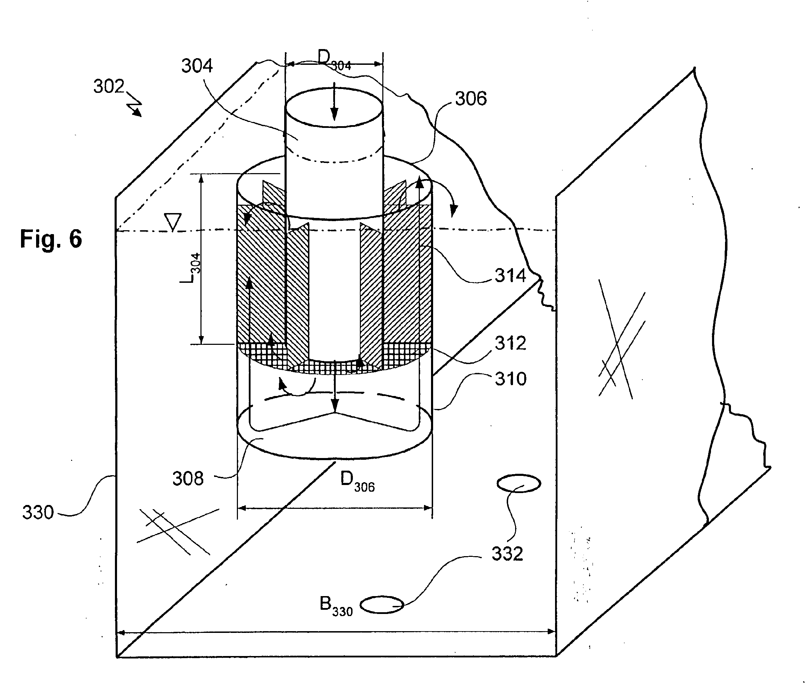

**Fig. 5** a/b/c zeigt vergrößert Ausführungsformen des Hauptkanals 202, des Strömungszerlegers 212 und des Nebenkanals 210. Die Flüssigkeit verläßt den Nebenkanal 210 über andere hydraulisch definierte Flüssigkeitsaustrittsöffnungen 216. Die Flüssigkeitsaustrittsöffnungen 216 können als konventionelle Grundlöcher 216 a, als einfache seitliche Löcher 216 b oder als seitliche Löcher mit Ableitrohren 216 c ausgeführt sein (siehe Fig. 5 c). Sie leiten die Flüssigkeit in das darunter angeordnete offene Verteiler-Ausflußsystem. Die konstruktiven Elemente zwischen den Flüssigkeitsaustrittsöffnungen 216 und dem Verteiler-Ausflußsystem sind vorteilhafte aber nicht notwendige Einlaufberuhiger 302 (siehe auch Fig. 6). Sie verhindern, daß durch den Zulauf der Flüssigkeit im Verteilerkanal starke unerwünschte Strömungsturbulenzen entstehen. Die Einlaufberuhiger 302 sind unmittelbar unter den Flüssigkeitsaustrittsöffnungen 216 des Nebenkanals 210 angeordnet.

**Fig. 6** zeigt im Detail ein Ausführungsbeispiel für einen Einlaufberuhiger 302. Er besteht aus einem dünnwandigen Tauchrohr 304 mit vorzugsweise kreisförmigen Querschnitt, dessen Innendurchmesser größer ist als die sich darüber befindliche Flüssigkeitsaustrittsöffnung des Nebenkanals. Das Tauchrohr 304 ragt beispielsweise zu 50 bis 90 % seiner Länge L₃₀₄ in einen dünnwandigen Topf 306 hinein. Der Durchmesser D₃₀₆ des Topfes 306 ist mindestens um den Faktor √2 größer als der vom Tauchrohr 304, vorzugsweise nicht größer als die halbe Kanalbreite B₃₃₀. Der Topf 306 ist nach oben hin geöffnet, sein Boden 308 ist geschlossen, seine Mantelfläche 310 ist völlig geschlossen oder nur im oberen Randbereich perforiert ausgeführt. Zwischen Tauchrohr 304 und Topf 306 kann ein Siebgitter 312 und/oder ein Leitschaufelgitter 314 angeordnet werden. Die Flüssigkeit gelangt ins Tauchrohr 304 und von dort aus in den Topf 306. Der Boden 308 zwingt die nach unten fließende Flüssigkeit zur Richtungsumkehr. Durch das Siebgitter 312 werden großen Turbulenzen in kleine aufgeteilt, die schneller abklingen. Die nach oben gerichtete Flüssigkeitsströmung gleicht dann nahezu einer Quellströmung, die relativ schwach und gleichmäßig ist. Ein Leitschaufelgitter 314 ist für die gleichmäßige Ausrichtung der Flüssigkeitsströmung hilfreich. Die Flüssigkeit fließt anschließend seicht über den Rand des Topfes 306 in den Verteilerkanal 330.

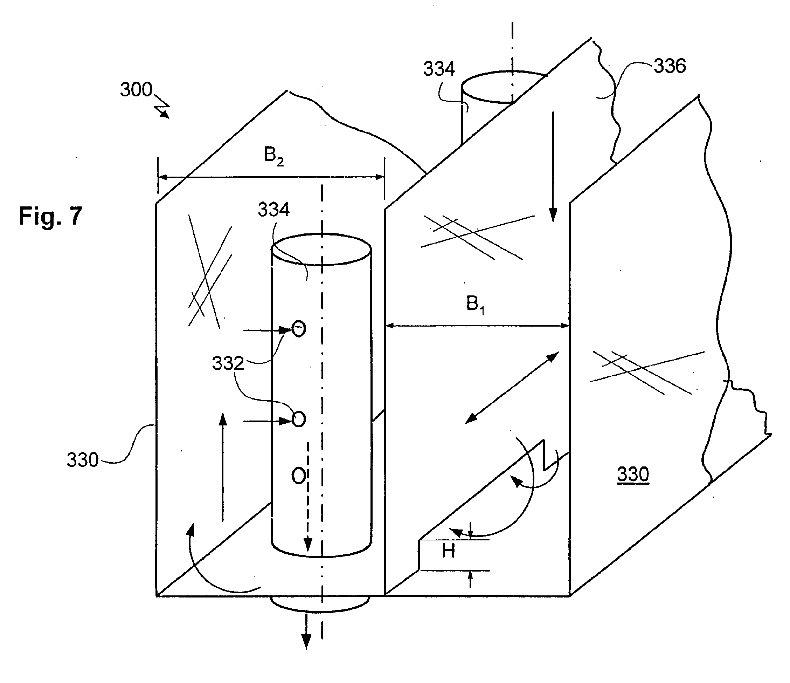

**Fig. 7** zeigt einen Ausschnitt eines Ausführungsbeispiels für ein Verteiler-Ausflußsystem 300. Dargestellt ist ein dünnwandiger Verteilerkanal 330 mit innenliegenden Rohren 334 und einem vertikal angeordneten Schütz 336, das als Strömungszerleger dient und den Verteilerkanal 330 in quasi zwei Kammern aufteilt. Die Flüssigkeit gelangt vom Nebenkanal oder Einlaufberuhiger in die erste Kammer mit der Breite B₁. Diese wird gebildet durch das Wehr 336 und beispielsweise der rechten Seitenwand des Verteilerkanals 330. In diesem Bereich kann sich die Flüssigkeit horizontal gleichmäßig verteilen und fließt dann durch eine hydraulisch definierte Öffnung mit der Höhe H in die zweite Kammer mit der Breite B₂ zu den Rohren 334. Die Rohre 334 besitzen Flüssigkeitsaustrittsöffnungen 332 durch welche die Flüssigkeit zum darunterliegenden Packungsbett abfließt.

## Patentansprüche

1. Vorrichtung zum Sammeln und Verteilen von Flüssigkeit in einer Kolonne, mit mindestens einem Lamellensammler (200) und einem darunter angeordneten Verteiler-Ausflußsystem (300), wobei in dem oder jedem Lamellensammler nebst einer Lamelle (204) ein Hauptkanal (202), ein Nebenkanal (210) sowie ein die beiden Kanäle trennender Strömungszerleger (212) integriert sind, die beiden Kanäle horizontal ausgerichtet an einem unteren Ende der Lamelle angeordnet sind und Flüssigkeitsaustrittsöffnungen (214, 216, 332) im Verteiler-Ausflußsystem sowie in beiden Kanälen in einer Kombination angeordnet sind, aufgrund welcher sich ein hydrodynamischer Ausgleich für eine zu verteilende Flüssigkeit ergibt.

2. Vorrichtung nach Anspruch 1, **dadurch gekennzeichnet, daß** der Lamellensammler (200) mit dem Hauptkanal (202) und dem Nebenkanal (210) sowie dem Strömungszerleger (212) eine Einheit bildet, die aus einem flächigen Material durch zueinander winklig angeordnete Flächenelemente aufgebaut ist.

3. Vorrichtung nach Anspruch 1, **dadurch gekennzeichnet, daß** der Strömungszerleger (212) derart gestaltet ist, daß ein Flüssigkeitseintritt in den Nebenkanal (210) durch die Flüssigkeitsaustrittsöffnungen (214) aus dem Hauptkanal (202) von oben oder von unten erfolgt.

4. Vorrichtung nach einem der Ansprüche 1 bis 3, **dadurch gekennzeichnet, daß** mehrere Lamellensammler (200) parallel zueinander angeordnet die gesamte Querschnittsfläche einer Stoffaustauschkolonne bedecken.

5. Vorrichtung nach einem der Ansprüche 1 bis 4, **dadurch gekennzeichnet, daß** mehrere Hauptkanäle (202) der Lamellensammler (200) durch einen Ringkanal des Sammlers (240) miteinander verbunden sind.

6. Vorrichtung nach einem der Ansprüche 1 bis 4, **dadurch gekennzeichnet, daß** der Flüssigkeitsaustritt (216) aus dem Nebenkanal (210) in das Verteiler-Ausflußsystem (300) über einen Einlaufberuhiger (302) erfolgt.

7. Vorrichtung nach einem der Ansprüche 1 bis 4, **dadurch gekennzeichnet, daß** der Flüssigkeitsaustritt (216) aus dem Nebenkanal (210) in eine Kammer des Verteiler-Ausflußsystems (300) mündet, die sich zwischen einer Seitenwand (330) des Verteiler-Ausflußsystems und einem Wehr (336) befindet.

8. Vorrichtung nach Anspruch 7, **dadurch gekennzeichnet, daß** Einlaufberuhiger (302) aus einem mittig in einem Topf (306) angeordneten Tauchrohr (304) aufgebaut ist, wobei der Querschnitt des Tauchrohrs (304) größer ist als die sich darüber befindliche Flüssigkeitsaustrittsöffnung (216) des Nebenkanals (210).

9. Vorrichtung nach Anspruch 7, **dadurch gekennzeichnet, daß** das Tauchrohr (304) zu 50 bis 90 % seiner Länge (L₃₀₄) in einen dünnwandigen Topf (306) hineinragt.

10. Vorrichtung nach Anspruch 9, **dadurch gekennzeichnet, daß** die Querschnittsfläche des Topfes (306) mindestens doppelt so groß ist wie die Querschnittsfläche des Tauchrohrs (304).

11. Vorrichtung nach Anspruch 9, **dadurch gekennzeichnet, daß** bei kreisförmigem Querschnitt von Tauchrohr (304) und Topf (306) der Durchmesser (D₃₀₆) des Topfes (306) mindestens um den Faktor √2 größer ist als der Durchmesser des Tauchrohrs (304) und vorzugsweise nicht größer als die halbe Kanalbreite (B₃₃₀) ist.

12. Vorrichtung nach Anspruch 9, **dadurch gekennzeichnet, daß** der Topf (306) unten einen Boden (308) besitzt und nach oben hin geöffnet ist.

13. Vorrichtung nach Anspruch 9, **dadurch gekennzeichnet, daß** über die gesamte Querschnittsfläche des Topfes (306) oder nur zwischen Tauchrohr (304) und Topf (306) ein Siebgitter (312) angebracht ist.

14. Vorrichtung nach Anspruch 9 und 10, **dadurch gekennzeichnet, daß** ein Leitschaufelgitter (314) mindestens zwischen der Überlappung von Topf (306) und Tauchrohr (304) angeordnet ist.

## Claims

1. An apparatus for the collection and distribution of liquid in a column, comprising at least one lamella collector (200) and a distributor outflow system (300) which is arranged below it, with a main passage (202), a side passage (210) and a flow splitter (212) separating the two passages being integrated in the or each lamella collector, with the two passages being longitudinally aligned at a lower end of the lamella and with liquid outflow openings (214, 216, 332) being arranged in the distributor outflow system and also in the two passages in a combination, as a result of which a hydrodynamic equalisation for a liquid to be distributed results.

2. An apparatus in accordance with claim 1, **characterised in that** the lamella collector (200) together with the main passage (202) and the side passage (210) as well as the flow splitter (212) forms a unit which is built up of an areal material through surface elements which are arranged angularly to one another.

3. An apparatus in accordance with claim 1, **characterised in that** the flow splitter (212) is designed in such a manner that a liquid entry into the side passage (210) takes place out of the main passage (202) from above or from below through the liquid outflow openings (214).

4. An apparatus in accordance with any one of the claims 1 to 3, **characterised in that** a plurality of lamella collectors (200) arranged parallel to one another cover over the entire cross-sectional area of a material exchange column.

5. An apparatus in accordance with any one of the claims 1 to 4, **characterised in that** a plurality of main passages (202) of the lamella collectors (200) are connected to one another by a ring passage of the collector (240).

6. An apparatus in accordance with any one of the claims 1 to 4, **characterised in that** the liquid outlet (216) out of the side passage (210) into the distributor outflow system (300) takes place via an inflow calmer (302).

7. An apparatus in accordance with any one of the claims 1 to 4, **characterised in that** the liquid outlet (216) out of the side passage (210) opens into a chamber of the distributor outflow system (300) which is located between a side wall (330) of the distributor outflow system and a weir (336).

8. An apparatus in accordance with claim 7, **characterised in that** inflow calmer (302) is built up of an immersion tube (304) which is arranged centrally in a pot (306), with the cross-section of the immersion tube (304) being larger than the liquid outlet opening (216) of the side passage (210) lying above it.

9. An apparatus in accordance with claim 7, **characterised in that** the immersion tube (304) protrudes by 50 to 90 % of its length (L₃₀₄) into a thin walled pot (306).

10. An apparatus in accordance with claim 9, **characterised in that** the cross-sectional area of the pot (306) is at least twice as large as the cross-sectional area of the immersion tube (304).

11. An apparatus in accordance with claim 9, **characterised in that** with a circular cross-section of immersion tube (304) and pot (306) the diameter (D₃₀₆) of the pot (306) is greater than the diameter of the immersion tube (304) by a factor of at least √2 and is preferably not greater than half the passage width (B₃₃₀).

12. An apparatus in accordance with claim 9, **characterised in that** the pot (306) has a base (308) at the bottom and is open upwardly.

13. An apparatus in accordance with claim 9, **characterised in that** a screen grid (312) is arranged over the entire cross-sectional area of the pot (306) or only between immersion tube (304) and pot (306).

14. An apparatus in accordance with claim 9 and 10, **characterised in that** a guide vane grid (314) is arranged at least between the overlap of pot (306) and immersion tube (304).

## Revendications

1. Dispositif pour collecter et distribuer du liquide dans une colonne, comprenant au moins un collecteur à lamelles (200) et un système de sortie de distributeur (300) disposé au-dessous, un canal principal (202), un canal secondaire (210) et un séparateur d'écoulement (212) séparant les deux canaux étant intégrés dans le ou chaque collecteur à lamelles à côté d'une lamelle (204), les deux canaux étant orientés horizontalement, disposés sur une extrémité inférieure de la lamelle et des orifices de sortie de liquide (214, 216, 332) étant disposées dans le système d'évacuation de distributeur ainsi que dans les deux canaux dans une combinaison, sur la base de laquelle on obtient un équilibre hydrodynamique pour un liquide à distribuer.

2. Dispositif selon la revendication 1, **caractérisé en ce que** le collecteur à lamelles (200) forme avec le canal principal (202) et le canal secondaire (210) ainsi que le séparateur d'écoulement (212) une unité qui est constituée dans un matériau plat par des éléments de surface disposés les uns par rapport aux autres en formant un angle.

3. Dispositif selon la revendication 1, **caractérisé en ce que** le séparateur d'écoulement (212) est conçu de telle sorte qu'une entrée de liquide dans le canal principal (210) s'effectue des orifices de sortie de liquide (214) du canal principal (202) par le haut ou par le bas.

4. Dispositif selon l'une quelconque des revendications 1 à 3, **caractérisé en ce que** plusieurs collecteurs à lamelles (200), disposés parallèlement entre eux, recouvrent une surface de section globale d'une colonne d'échange de matière.

5. Dispositif selon l'une quelconque des revendications 1 à 4, **caractérisé en ce que** plusieurs canaux principaux (202) des collecteurs à lamelles (200) sont reliés entre eux par un canal annulaire du collecteur (240).

6. Dispositif selon l'une quelconque des revendications 1 à 4, **caractérisé en ce que** la sortie de liquide (216) du canal secondaire (210) dans le système de sortie de distributeur (300) s'effectue au moyen d'un tranquilliseur d'entrée (302).

7. Dispositif selon l'une quelconque des revendications 1 à 4, **caractérisé en ce que** la sortie de liquide (216) du canal secondaire (210) débouche dans une chambre du système de sortie de distributeur (300) qui se trouve entre une paroi latérale (330) du système de sortie de distributeur et un déversoir (336).

8. Dispositif selon la revendication 7, **caractérisé en ce qu'**un tranquilliseur d'entrée (302) est conçu à partir d'un tube à immersion (304) disposé au centre dans un pot (306), la section du tube à immersion (304) étant supérieure à l'ouverture de sortie de liquide (216) se trouvant au-dessus du canal secondaire (210).

9. Dispositif selon la revendication 7, **caractérisé en ce que** le tube à immersion (304) dépasse sur 50 à 90 % de sa longueur (L₃₀₄) dans un pot (306) à paroi mince.

10. Dispositif selon la revendication 9, **caractérisé en ce que** la surface de section du pot (306) est au moins deux fois plus grande que la surface de section du tube à immersion (304).

11. Dispositif selon la revendication 9, **caractérisé en ce que**, dans le cas d'une section circulaire du tube à immersion (304) et du pot (306), le diamètre (D₃₀₆) du pot est supérieur d'au moins du facteur √2 au diamètre du tube à immersion (304) et de préférence non supérieur à la demi-largeur du canal (B₃₃₀).

12. Dispositif selon la revendication 9, **caractérisé en ce que** le pot (306) présente un fond (308) en bas et est ouvert vers le haut.

13. Dispositif selon la revendication 9, **caractérisé en ce qu'**une grille à tamis (312) est placée sur l'ensemble de la surface de section du pot (306) ou seulement entre le tube à immersion (304) et le pot (306).

14. Dispositif selon les revendications 9 et 10, **caractérisé en ce qu'**une grille à aube directrice (314) est disposée au moins entre le chevauchement du pot (306) et le tube à immersion (304).
